# EUROPÄISCHE PATENTSCHRIFT

(11) **EP 1 249 647 B1**
(45) Veröffentlichungstag und Bekanntmachung des Hinweises auf die Patenterteilung: **16.03.2005**
(21) Anmeldenummer: 02002303.2
(22) Anmeldetag: 30.01.2002
(51) Int. Cl.: F16J 15/00, B29C 45/14, H01R 13/52

(54) **Abdichtung für ein mit Kunststoff umspritztes Metallteil und Verfahren zur Herstellung derselben**
Sealing for metallic part coated with injected plastic, and method for the manufacture of the same
Joint d'étanchéité pour pièce métallique revêtue de plastique par injection, ainsi que son procédé de fabrication

(30) Priorität: 09.04.2001 DE 10118771
(43) Veröffentlichungstag der Anmeldung: 16.10.2002
(60) Teilanmeldung: 04009456.7
(73) Patentinhaber: WOCO Industrietechnik GmbH, 63628 Bad Soden-Salmünster (DE)
(72) Erfinder: Reichert, Uwe, 36381 Schlüchtern (DE); Müller, Heike, 36381 Schlüchtern (DE); Prajza, Josef, 75501 Vsetin (CZ)
(74) Vertreter: Weber-Bruls, Dorothée, Dr.

(56) Entgegenhaltungen:
- FR-A- 2 610 693
- US-A- 4 560 189
- US-A- 4 870 249
- US-A- 6 062 206

## Beschreibung

Die vorliegende Erfindung betrifft eine Abdichtung für ein mit Kunststoff umspritztes Metallteil nach dem Oberbegriff von Anspruch 1.

Bei mit Kunststoff umspritzten Metallteilen, die durch die Umspritzung wasserdicht werden sollen, aber auch z. B. bei umspritzten Elektrokontakten, besteht das Problem, daß durch die unterschiedlichen Wärmeausdehnungskoeffizienten im Betriebstemperaturbereich Spalte zwischen Metallteil und Umspritzung und somit eine Undichtigkeit entstehen, obwohl der Kunststoff auf dem Metallteil aufgeschrumpft ist. Diese Spalte, wenn auch nur sehr klein, ermöglichen einen Eintritt eines Mediums, wie insbesondere Wasser, Öl, Bremsflüssigkeit, basische, ätzende und/oder fluide organische Stoffe, insbesondere Frostschutz- und/oder Reinigungsmittel, beinhaltende Flüssigkeiten, Kraftstoff, Verbrennungsrückstände oder dergleichen.

Im konkreten Fall eines Entlüftungsrohres zur Entlüftung des Kurbelgehäuses eines Verbrennungsmotors hat solch eine Undichtigkeit bereits schon zu Kurzschlüssen bis hin zu kompletten Kabelbränden geführt. Derartige Entlüftungsrohre bestehen üblicherweise aus einem Kupferrohr und einer Kunststoffumspritzung, zwischen die Öl, Wasser und Verbrennungsrückstände, wie schwefelhaltige Substanzen, durch Kapillarwirkung eindringen können. Dadurch können Kriechströme fließen, die zu Kurzschlüssen bzw. Widerstandsreduzierungen bei üblicherweise vorhandenen Heizelementen in Form von PTC (Positive Temperature Coefficient)-Widerständen führen.

Das Ausmaß des Undichtigkeits-Problems hängt von der Geometrie des Metallteils ab. Je kleiner das mit Kunststoff umspritzte Metallteil ist, umso günstiger ist dies für die Dichtheit der Kunststoffumspritzung, da die relative Längenänderung unter Temperatur entsprechend klein und damit die entstehenden Spalte in der Regel zu klein für einen Eintritt eines Mediums sind.

Ein mit Kunststoff urnspritztes Metallteil, das ein Entlüftungsrohr zur Entlüftung des Kurbelgehäuses eines Verbrennungsmotors bzw. einen Abschnitt desselben darstellt, wobei das Entlüftungsrohr bzw. der Abschnitt mit zumindest einem Heizelement in Form eines PTC-Widerstands in Wirkverbindung steht, das Entlüftungsrohr bzw. der Abschnitt eine abgeplattete Seite aufweist, der zumindest eine PTC-Widerstand scheibenförmig gestaltet ist und direkt an der abgeplatteten Seite anliegt, und zumindest ein erster und zumindest ein zweiter Steckeranschluss vorgesehen sind, von denen der zumindest eine erste Steckeranschluss über zumindest ein erstes Kontaktstück mit dem Entlüftungsrohr bzw. dem Abschnitt direkt in Verbindung steht und der zumindest eine zweite Steckeranschluss über zumindest ein zweites Kontaktstück mit dem zumindest einen PTC-Widerstand direkt in Verbindung steht, ist aus der US 6,062,206 bekannt.

Die US 4,870,249 offenbart ein Heizgerät für eine Kraftstoffzuleitung, welche eine metallische Röhre umfasst, die abgeflachte Seiten aufweiset, auf denen PTC-Elemente aufgebracht sind. Um das Metallrohr und die PTC-Heizelemente ist dabei eine Metallhülse gesteckt, die zur Kontaktierung der Heizelemente Federelemente aufweist. Um die Federelemente anzudrücken, ist eine weitere Hülse auf das System aufgesteckt, wobei eine zusätzliche Hülse auf die äußere Hülle aufgebracht ist. Die beiden Hülsen sind als rohr- oder schlauchförmige Gebilde ausgeführt und bestehen beispielsweise aus synthetischem Harz.

Die FR 2 610 693 A1 betrifft eine Dichtungsanordnung für Ventile. Bei der Verbindung eines Metallteils, zum Beispiel einer aus Metall bestehenden Gewindebuchse eines Druckmittelanschlusses eines Ventils, mit einem aus Kunststoff bestehenden Gehäuseteil ist am Metallteil wenigstens eine Nut ausgebildet, in welche ein Dichtelement, so zum Beispiel ein O-Ring, unter Verspannung bzw. Abdichtung gegenüber den Nutwänden eingelegt ist. Das Metallteil mit eingelegtem Dichtelement ist durch das Kunststoffmaterial eines Gehäuseteiles umspritzt, so daß in Folge der Verspannung des Dichtelements gegenüber den Nutwänden am Nutgrund ein nicht durch Kunststoff gefüllter Freiraum verbleibt, welcher Relativbewegungen des Dichtelements in Folge unterschiedlicher Wärmedehnungen der miteinander verbundenen Teile zulässt.

Die US 4,560,180 offenbart, wie bereits die FR 2 610 693 A, eine Dichtungsanordnung unter Einsatz von O-Ringen in Nuten.

Der Erfindung liegt die Aufgabe zugrunde, eine Abdichtung für ein mit Kunststoff umspritztes Metallteil gemäß dem Oberbegriff von Anspruch 1 zu liefern, mit der das oben beschriebene Problem der mangelnden Dichtigkeit beseitigt, zumindest reduziert wird.

Diese Aufgabe wird erfindungsgemäß gelöst durch das Kennzeichen von Anspruch 1.

Weitere bevorzugte Abdichtungen gemäß der Erfindung sind in den Ansprüchen 2 bis 9 beschrieben.

Der Erfindung liegt die überraschende Erkenntnis zugrunde, daß durch die Anordnung eines Elements aus einem elastischen Material zwischen dem Metallteil und der Kunststoffumspritzung eine dauerhaft dichte Kunststoffumspritzung gewährleistet wird. Dies liegt daran, daß das elastische Material durch den Kunststoffschrumpfprozeß und den Kunststoffspritzdruck derart verpresst wird, daß genügend Rückstellkräfte vorhanden sind, um die mögliche Wärmeausdehnung des Kunststoffes zu kompensieren. Dies gilt insbesondere dann, wenn das/die Elemente eine entsprechende Vorspannung auf dem Metallteil aufweisen.

Die erfindungsgemäße Abdichtung weist mehrere Vorteile auf:
1. Es ist keine Werkzeugänderung erforderlich.
2. Das elastische Element ist von außen nicht sichtbar und nicht direktem Kontakt mit einem Medium ausgesetzt. Lediglich die Enden des Elementes können mit dem Medium in Berührung treten, wobei aber durch Quellung bei Kontakt mit dem Medium eine zusätzliche Abdichtung erfolgt.
3. Bei Verwendung eines Elements in Form eines Schlauches entsteht eine lange Dichtfläche. Dabei hat es sich als besonders vorteilhaft herausgestellt, daß Nuten in das Metallteil eingebracht werden, wodurch das Abdichtverhalten des umspritzten Schlauches deutlich verbessert wird, indem die Dichtungswirkung lokal erhöht wird. Weist das Metallteil keine Oberflächenstruktur auf, so entsteht die Abdichtungswirkung im wesentlichen durch die Vorspannung des Schlauches, welche bei dem Aufziehen auf das Kupferrohr und/oder durch den Spritzdruck beim Aufbiegen des Kunststoffs eingebracht wird, erreicht. Durch die Nuten entsteht der Vorteil, daß der Schlauch sich bei der Umspritzung zusätzlich verformt und gezielt eine für die Abdichtung erforderliche zusätzliche Vorspannung im Bereich der Nuten eingebracht wird. Diese Vorspannung aufgrund der zusätzlichen Verformung des Schlauches führt zu einer gezielten Verbesserung der Abdichtung im Bereich der Nuten.
4. Eine lokal große Abdichtwirkung kann ferner auch dadurch erzielt werden, daß das Metallteil Nuten aufweist, in welche ein elastisches Element, insbesondere in Form eines O-Rings, eingesetzt wird. Die Abdichtwirkung entsteht auch hier dadurch, daß einerseits der O-Ring unter Vorspannung auf das Metallteil aufgebracht wird und zusätzlich durch den Spritzdruck eine Vorspannung erzielt wird. Besonders vorteilhaft ist es, wenn die Nut im wesentlichen der Form des O-Rings angepaßt ist, jedoch ein Freiraum in der Nut vorhanden ist, der durch das elastische Element vor der Umspritzung mit dem Kunststoff nicht ausgefüllt wird. So bleibt zunächst unterhalb des umspritzten Elastomers Luft, was dazu führt, daß das Elastomer "atmen" und damit besser abdichten kann, wenn es zu einer Ausdehnung des umspritzten Kunststoffes kommt.
5. Wenn weitere Aufbauten auf dem Metallteil, insbesondere empfindliche elektronische Bauelemente, wie ein PTC-Widerstand, vorhanden sind, so werden diese durch ein elastisches Element in Form eines Schlauchs davor geschützt, daß sie durch das Umspritzen mit Kunststoff einem sehr hohen Druck und hohen Temperaturen ausgesetzt und nach dem Umspritzen durch die Schwindung des Kunststoffes zusätzlich belastet werden, was Haarrisse zur Folge haben könnte. Ebenso vorteilhaft ist der Einsatz O-ringförmiger Elemente in Kombination mit elektronischen Bauelementen, wobei die elektronischen Bauelemente jeweils zwischen O-Ringen angeordnet sein sollten, um eine Abdichtung zu gewährleisten.

Weitere Merkmale und Vorteile der Erfindung ergeben sich aus der nachstehenden Beschreibung, in der ein Ausführungsbeispiel der Erfindung anhand schematischer Zeichnungen im Einzelnen erläutert sind. Dabei zeigt:
- Figur 1: eine Schnittansicht eines Entlüftungsrohres mit einer Abdichtung gemäß einer Ausführungsform der vorliegenden Erfindung; und
- Figur 2: eine Schnittansicht entlang der Linie II - II von Figur 1;

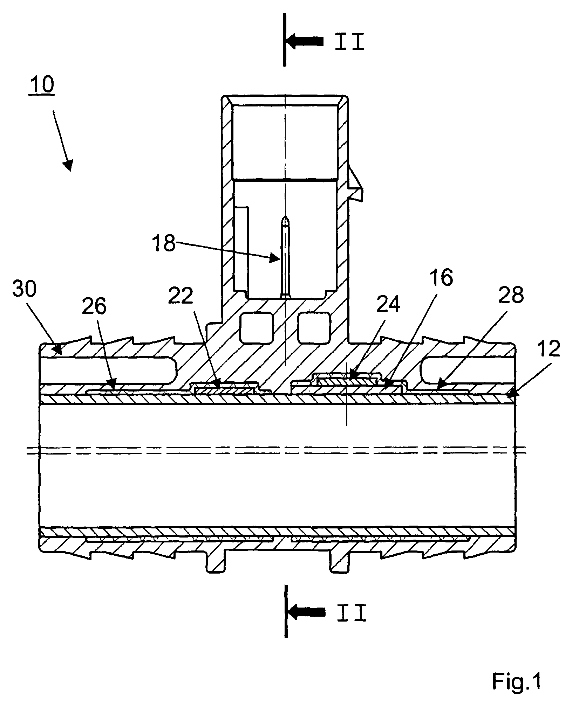

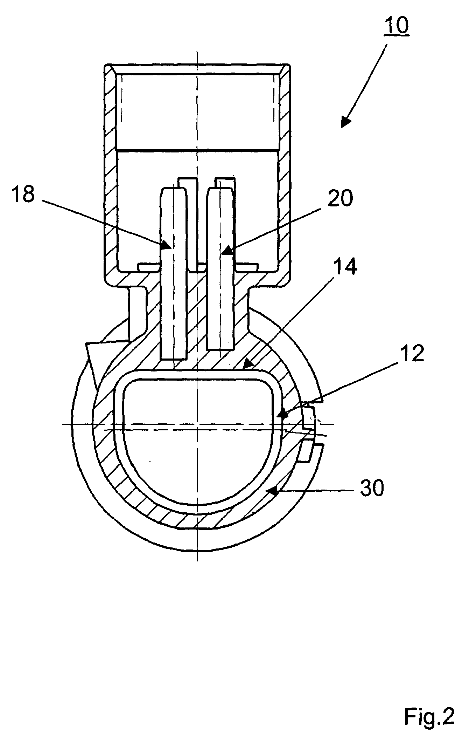

Figur 1 zeigt ein Entlüftungsrohr 10 zur Entlüftung eines nicht dargestellten Kurbelgehäuses eines Verbrennungsmotors in Schnittansicht. Das Entlüftungsrohr 10 besteht aus einem Metallteil in Form eines Kupferrohrs 12 mit einer abgeplatteten Seite 14 (siehe Figur 2), an der ein scheibenförmiger PTC-Widerstand 16 als Heizelement anliegt. Desweiteren sind ein erster und ein zweiter Steckeranschluß 18 und 20 (siehe Figur 2) vorgesehen, wobei der erste Steckeranschluß 18 über ein erstes Kontaktstück 22 mit dem Kupferrohr 12 direkt in Verbindung steht und der zweite Steckeranschluß 20 über ein zweites Kontaktstück 24 mit dem PTC-Widerstand 16 direkt in Verbindung steht. Ein erstes elastisches Element in Form eines ersten Schlauchs 26 aus Silikon ist über einen Teil des Kupferrohres 12 und das erste Kontaktstück 22 gezogen. Ein zweites elastisches Elements in Form eines zweiten Schlauchs 28 aus Silikon ist über das zweite Kontaktstück 24 und einen weiteren Teil des Kupferrohres 12 gezogen. Außen herum befindet sich eine Kunststoffumspritzung 30.

Dadurch, daß der erste und zweite Schlauch 26 und 28 mit entsprechender Vorspannung auf das Kupferrohr 12 gezogen und anschließend mit der Kunststoffumspritzung 30 versehen worden sind, sind die ersten und zweiten Schläuche 26 und 28 durch den Kunststoffschrumpfprozeß und den Kunststoffspritzdruck derart verpreßt, daß genügend Rückstellkräfte vorhanden sind, um die Wärmeausdehnung des Kunststoffes zu kompensieren und eine dauerhaft dichte Kunststoffumspritzung 30 zu gewährleisten. Die Verpressung muß so groß sein, daß die Vergrößerung der Kunststoffumspritzung 30 durch temperaturbedingte Ausdehnung oder Aufnahme von Flüssigkeiten, insbesondere Wasser, durch elastische Nachstellung der Schläuche 26, 28 kompensiert wird. Durch die unterschiedlichen Ausdehnungskoeffizienten, wenn überhaupt, entstehen minimale Spalte zwischen dem Kupferrohr 12 und der Kunststoffumspritzung 30.

## Patentansprüche

1. Abdichtung für ein mit Kunststoff (30) umspritztes Metallteil (12), das ein Entlüftungsrohr (10) zur Entlüftung des Kurbelgehäuses eines Verbrennungsmotors bzw. einen Abschnitt desselben darstellt, wobei das Entlüftungsrohr (10) bzw. der Abschnitt mit zumindest einem Heizelement in Form eines PTC-Widerstands (16) in Wirkverbindung steht, das Entlüftungsrohr (10) bzw. der Abschnitt eine abgeplattete Seite (14) aufweist, der zumindest eine PTC-Widerstand (16) scheibenförmig gestaltet ist und direkt an der abgeplatteten Seite (14) anliegt, und zumindest ein erster und zumindest ein zweiter Steckeranschluß (18 und 20) vorgesehen sind, von denen der zumindest eine erste Steckeranschluß (18) über zumindest ein erstes Kontaktstück (22) mit dem Entlüftungsrohr (10) bzw. dem Abschnitt direkt in Verbindung steht und der zumindest eine zweite Steckeranschluß (20) über zumindest ein zweites Kontaktstück (24) mit dem zumindest einen PTC-Widerstand (16) direkt in Verbindung steht, **dadurch gekennzeichnet, daß**
zwischen dem Metallteil (12) und dem Kunststoff (30) zumindest ein das Metallteil (12) zumindest bereichsweise umgebendes Element (26, 28) aus elastischem Material angeordnet ist, wobei das Element zwei Schläuche (26 und 28) umfaßt, von denen der eine Schlauch (26) über einem Teil des Entlüftungsrohres (10) bzw. des Abschnittes und dem zumindest eine erste Kontaktstück (22) und der andere Schlauch (28) über einem weiteren Teil des Entlüftungsrohres (10) bzw. Abschnittes und dem zumindest eine zweite Kontaktstück (24) angeordnet ist.

2. Abdichtung nach Anspruch 1, **dadurch gekennzeichnet, daß**
das zumindest ein Element (26, 28) eine Vorspannung, auf dem Metallteil (12) aufweist.

3. Abdichtung nach Anspruch 1 oder 2, **dadurch gekennzeichnet, daß**
das Metallteil zumindest im Bereich des zumindest einen Elements eine Oberflächenstruktur, insbesondere in Form zumindest einer Nut zur zumindest teilweisen Aufnahme des zumindest einen Elements, aufweist.

4. Abdichtung nach einem der vorangehenden Ansprüche, **dadurch gekennzeichnet, daß**
das zumindest eine Element auf der dem Metallteil abgewandten und/oder zugewandten Seite eine Oberflächenstruktur aufweist.

5. Abdichtung nach Anspruch 3, **dadurch gekennzeichnet, daß**
die Oberflächenstruktur des Metallteils, insbesondere die zumindest eine Nut, dem Querschnitt des zumindest einen Elements, insbesondere in Form zumindest eines Rings, im wesentlichen angepaßt ist.

6. Abdichtung nach Anspruch 5, **dadurch gekennzeichnet, daß**
zwischen der Oberflächenstruktur des Metallteils und dem zumindest einen Element vor der Umspritzung mit dem Kunststoff Freiraum vorhanden ist, in welchen sich das Element während der Umspritzung zumindest teilweise bewegen und/oder ausdehnen kann.

7. Abdichtung nach einem der vorangegangenen Ansprüche, **dadurch gekennzeichnet, daß**
im Bereich zwischen einem ersten Ende des Entlüftungsrohres (10) bzw. des Abschnittes und dem zumindest einen ersten Kontaktstück (22) und/oder zwischen dem zweiten Ende des Entlüftungsrohres (10) bzw. des Abschnittes und dem zumindest einen zweiten Kontaktstück (24) das Entlüftungsrohr (10) bzw. der Abschnitt zumindest eine Nut aufweist.

8. Abdichtung nach einem der vorangehenden Ansprüche, **dadurch gekennzeichnet, daß**
das Entlüftungsrohr (10) bzw. der Abschnitt ein Kupferrohr (12) ist.

9. Abdichtung nach einem der vorangehenden Ansprüche, **dadurch gekennzeichnet, daß**
das elastische Material bei Kontaktierung mit Wasser, Öl, Bremsflüssigkeit, basischen, ätzenden und/oder fluide organische Stoffe, insbesondere Frostschutz- und/oder Reinigungsmittel, beinhaltenden Flüssigkeiten, Kraftstoff und/oder Verbrennungsrückständen aufquellbar ist und/oder Silikon umfaßt.

## Claims

1. A seal for a metal part (12) sheathed in plastic (30) and forming a venting tube (10) to vent the crankcase of an internal combustion engine or a portion thereof, the venting tube (10) or the said portion being operatively connected to at least one heating element in the form of a PTC resistance (16), the venting tube (10) or the portion has a flattened side (14), the at least one PTC resistance (16) is of discoid shape and bears directly against the flattened side (14), and at least one first and at least one second plug connection (18 and 20) are provided, of which the at least one first plug connection (18) is directly connected to the venting tube (10) or the portion via at least one first contact member (22) and the at least one second plug connection (20) is directly connected to the at least one PTC resistance (16) via at least one second contact member (24), **characterised in that** at least one element (26, 28) of elastic material surrounding the metal part (12) at least in zones is disposed between the metal part (12) and the plastic (30), the element comprising two flexible tubes (26 and 28), of which one tube (26) is disposed over a part of the venting tube or the portion and the at least one first contact member (22) and the other tube (28) is disposed over another part of the venting tube (10) or portion and the at least one second contact member (24).

2. A seal according to claim 1, **characterised in that** the at least one element (26, 28) has a prestressing on the metal part (12).

3. A seal according to claim 1 or 2, **characterised in that** the metal part has, at least in the region of the at least one element, a surface structure, particularly in the form of at least one groove for at least partial reception of the at least one element.

4. A seal according to any one of the preceding claims, **characterised in that** the at least one element has a surface structure on the side remote from and/or on the side facing the metal part.

5. A seal according to claim 3, **characterised in that** the surface structure of the metal part, particularly the at least one groove, is substantially adapted to the cross-section of the at least one element, particularly in the form of at least one ring.

6. A seal according to claim 5, **characterised in that** a clearance is provided between the surface structure of the metal part and the at least one element before the sheathing with the plastic, in which clearance the element can at least partially move and/or expand during the sheathing.

7. A seal according to any one of the preceding claims, **characterised in that** the venting tube (10) or the portion has at least one groove in the region between a first end of the venting tube (10) or the portion and the at least one first contact member (22) and/or between the second end of the venting tube (10) or the portion and the at least one second contact member (24).

8. A seal according to any one of the preceding claims, **characterised in that** the venting tube (10) or the portion is a copper tube (12).

9. A seal according to any one of the preceding claims, **characterised in that** on contacting with water, oil, brake fluid, basic, corrosive and/or fluid organic substances, particularly liquids containing anti-freeze and/or detergents, fuel and/or combustion residues, the elastic material is adapted to swell and/or contains silicone.

## Revendications

1. Joint d'étanchéité pour une pièce métallique (12), enrobée par injection de matière synthétique (30), constituant un tube de désaération (10) pour désaérer le carter de vilebrequin d'un moteur à combustion interne ou d'un tronçon de celui-ci, le tube de désaération (10) respectivement le tronçon étant relié fonctionnellement à au moins un élément chauffant ayant la forme d'une résistance à caractéristique de température positive PTC (16), le tube de désaération (10) ou le tronçon présentant une face (14) aplatie, la au moins une résistance PTC (16) ayant une forme discoïde et étant appliquée directement sur la face (14) aplatie, et au moins un premier et au moins un deuxième raccordement embrochable (18 et 20) étant prévus, dont le au moins un premier raccordement embrochable (18) est directement relié, par l'intermédiaire d'au moins un premier élément de contact (22), au tube de désaération (10) ou au tronçon, et le au moins un deuxième raccordement embrochable (20) étant directement relié, par au moins un deuxième élément de contact (24), à la au moins une résistance PTC (16), **caractérisé en ce qu'**entre la partie métallique (12) et la matière synthétique (30) est disposé au moins un élément (26, 27), entourant au moins par zones la pièce métallique (12) et réalisé en matériau élastique, l'élément comprenant deux tuyaux (26 et 28), dont un premier tuyau (26) est disposé sur une partie du tube de désaération (10) ou du tronçon, et au moins un premier élément de contact (22) et l'autre tuyau (28) étant disposés sur une autre partie du tube de désaération (10) ou du tronçon, et le au moins un deuxième élément de contact (24).

2. Joint d'étanchéité selon la revendication 1, **caractérisé en ce que** le au moins un élément (26, 28) présente une précontrainte sur la partie métallique (12).

3. Joint d'étanchéité selon la revendication 1 ou 2, **caractérisé en ce que** la partie métallique présente, au moins dans la zone du au moins un élément, une structure de surface, en particulier ayant la forme au moins d'une rainure pour recevoir au moins partiellement le au moins un élément.

4. Joint d'étanchéité selon l'une des revendications précédentes, **caractérisé en ce que** le au moins un élément présente une structure de surface opposée à la partie métallique et/ou tournée vers la partie métallique.

5. Joint d'étanchéité selon la revendication 3, **caractérisé en ce que** la structure de surface de la partie métallique, en particulier la au moins une rainure, est essentiellement adaptée à la section transversale du au moins un élément, en particulier en ayant la forme au moins d'un anneau.

6. Joint d'étanchéité selon la revendication 5, **caractérisé en ce qu'**entre la structure de surface de la partie métallique et le au moins un élément, avant l'enrobage par injection avec la matière synthétique, est prévu un espace libre dans lequel l'élément peut se déplacer au moins partiellement et/ou se dilater pendant l'enrobage par injection.

7. Joint d'étanchéité selon l'une des revendications précédentes, **caractérisé en ce que**, dans la zone située entre une première extrémité du tube de désaération (10), respectivement le tronçon et le au moins un premier élément de contact (22) et/ou entre la deuxième extrémité du tube de désaération (10) ou le tronçon et le au moins un deuxième élément de contact (24), le tube de désaération (10) ou le tronçon présente au moins une rainure.

8. Joint d'étanchéité selon l'une des revendications précédentes, **caractérisé en ce que** le tube de désaération (10) ou le tronçon est un tube en cuivre (12).

9. Joint d'étanchéité selon l'une des revendications précédentes, **caractérisé en ce que** le matériau élastique est susceptible de gonfler lors de la mise en contact avec de l'eau, de l'huile, un liquide de freinage, des substances organiques basiques, agressives et/ou fluides, en particulier des liquides contenant des produits anti-gel et/ou de nettoyage, du carburant et/ou des résidus de combustion, et/ou le matériau élastique contient du silicone.
